(19) Europäisches Patentamt
European Patent Office
Office européen des brevets

(11) EP 3 404 065 A1

(12) **EUROPEAN PATENT APPLICATION**

(43) Date of publication:
**21.11.2018 Bulletin 2018/47**

(21) Application number: **18170022.0**

(22) Date of filing: **30.04.2018**

(51) Int Cl.:
***C08L 23/22*** (2006.01) ***C08L 93/04*** (2006.01)
***C08K 3/04*** (2006.01) ***C08K 3/20*** (2006.01)
***B60C 1/00*** (2006.01) ***B29D 30/06*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2017 JP 2017096642**

(71) Applicant: **Sumitomo Rubber Industries, Ltd.**
**Kobe-shi, Hyogo 651-0072 (JP)**

(72) Inventor: **MIYAZAKI, Tatsuya**
**Kobe-shi,, Hyogo 651-0072 (JP)**

(74) Representative: **TBK**
**Bavariaring 4-6**
**80336 München (DE)**

(54) **RUBBER COMPOSITION**

(57) Provided are a rubber composition having excellent air permeation resistance, moldability, and durability, an inner liner formed of the rubber composition, a pneumatic tire having the inner liner, and a tire vulcanization bladder formed of the rubber composition. The rubber composition contains a rubber component containing not less than 70 mass% of a butyl-based rubber, and a hydrogenated rosin resin.

EP 3 404 065 A1

## Description

### BACKGROUND OF THE INVENTION

#### Field of the Invention

The present invention relates to a rubber composition, an inner liner formed of the rubber composition, a tire having the inner liner, and a tire vulcanization bladder formed of the rubber composition.

#### Description of the Background Art

In recent years, an inner liner rubber composition containing a butyl-based rubber as a rubber component becomes more and more important for keeping air pressure, maintaining low fuel consumption, preventing degradation of a plated layer of a steel cord or a covering rubber in a tire, and ensuring durability. Therefore, study for a rubber composition having more excellent air permeation resistance or durability is made.

It is known that, in order to improve the adhesiveness of an unvulcanized product at the time of tire molding for the inner liner rubber composition (state where attached portions do not come off during molding, after molding, or during vulcanization, that is, moldability), the blended amount of process oil, such as paraffin oil, is increased. In this case, for example, a problem arises that the airtightness of the obtained inner liner is insufficient.

It is also known that, in order to improve the air permeation resistance of the inner liner rubber composition, the butyl-based rubber content of the rubber component is 100 mass%, and compatibilized resin is added instead of paraffin oil. However, compatibilized resin is less adhesive than paraffin oil. In addition, increase of the compatibilized resin content enhances the glass transition temperature (Tg) of the rubber composition, so that crack resistance, in particular, low-temperature crack resistance (low-temperature crack means a phenomenon that rubber becomes glassy, brittle and easily broken, at a temperature that is not higher than Tg under extremely low-temperature environments, and is also called an "embrittlement crack") tends to be reduced.

It is preferable that the inner liner rubber composition has a Tg of not higher than -35°C in order to improve low-temperature crack resistance. In the case where it is difficult to achieve this, the occurrence of a crack can be prevented by reducing the complex elastic modulus (E*) at low temperature. Japanese Laid-Open Patent Publication No. 2015-38183 describes a tire, having an inner liner formed of an inner liner rubber composition containing a specific resin including a compatibilized resin, in which, when the inner liner rubber composition contains 30 to 46 parts by mass of a specific reinforcing filler with respect to 100 parts by mass of the rubber component, the low-temperature E* can be reduced, whereby the occurrence of a crack can be prevented. However, Japanese Laid-Open Patent Publication No. 2015-38183 does not indicate that a hydrogenated rosin resin is included.

International Publication WO 2017/018386 indicates that, when an inner liner rubber composition contains a predetermined terpene resin, air permeation resistance, adhesiveness (moldability), and durability are improved. However, there is room for further improvement.

Meanwhile, a tire vulcanization bladder is a rubber auxiliary material, for production, which is inserted into an unvulcanized tire, and water vapor, nitrogen gas, etc., is pressed into the bladder, and the tire is heated from the inside thereof and thereby vulcanized. The tire vulcanization bladder is repeatedly used under pressurized and heated conditions, and therefore, is vulcanized using a crosslinked resin that is highly resistant to heat. As with the inner liner, also for the tire vulcanization bladder, internal degradation of the bladder itself and degradation of the tire due to water vapor are required to be inhibited, i.e., air permeation resistance and durability are required.

### SUMMARY OF THE INVENTION

It is an object of the present invention to provide a rubber composition having excellent air permeation resistance, moldability, and durability, an inner liner formed of the rubber composition, a pneumatic tire having the inner liner, and a tire vulcanization bladder formed of the rubber composition.

Studies have been extensively conducted in order to achieve the above-described object. As a result, a novel rubber composition was found that contains a rubber component containing not less than 70 mass% of a butyl-based rubber, and a hydrogenated rosin resin, and thereby has excellent air permeation resistance (airtightness), moldability, and durability. Further studies have been conducted to complete the present invention.

That is, the present invention relates to

[1] a rubber composition including:

a rubber component containing not less than 70 mass%, preferably not less than 80 mass%, more preferably

not less than 90 mass%, and even more preferably 100 mass% of a butyl-based rubber; and
a hydrogenated rosin resin,

[2] the rubber composition according to [1], in which a content of the hydrogenated rosin resin is 1 to 40 parts by mass, preferably 2 to 40 parts by mass, more preferably 3 to 30 parts by mass, and even more preferably 4 to 25 parts by mass, with respect to 100 parts by mass of the rubber component,
[3] the rubber composition according to [1] or [2], in which the hydrogenated rosin resin has a glass transition temperature of not higher than 70°C, preferably 5 to 70°C, more preferably 5 to 67°C, and even more preferably 5 to 65°C,
[4] the rubber composition according to any one of [1] to [3], further including:

a resin, other than hydrogenated rosin resins, having a glass transition temperature of not lower than 40°C, preferably not lower than 42°C, more preferably not lower than 43°C, and even more preferably not lower than 50°C, in which
a total content of the resin is 0 to 30 parts by mass, preferably 1 to 20 parts by mass, more preferably 1 to 15 parts by mass, even more preferably 2 to 10 parts by mass, and still even more preferably 3 to 9 parts by mass, with respect to 100 parts by mass of the rubber component,

[5] the rubber composition according to any one of [1] to [4], further including carbon black,
[6] the rubber composition according to any one of [1] to [5], further including at least one selected from the group consisting of aluminium hydroxide, talc, clay, graphite, and mica,
[7] an inner liner including the rubber composition according to any one of [1] to [6],
[8] a pneumatic tire including the inner liner according to [7], and
[9] a tire vulcanization bladder including the rubber composition according to any one of [1] to [6].

The rubber composition of the present invention that contains a rubber component containing not less than 70 mass% of a butyl-based rubber, and a hydrogenated rosin resin can have excellent air permeation resistance, moldability, and durability.

DESCRIPTION OF THE PREFERRED EMBODIMENTS

A rubber composition according to the present embodiment contains a rubber component containing not less than 70 mass% of a butyl-based rubber, and a hydrogenated rosin resin.

<Rubber Component>

The rubber component of the present embodiment contains not less than 70 mass% of a butyl-based rubber.

(Butyl-based rubber)

Examples of the butyl-based rubber include a butyl rubber (IIR), a halogenated butyl rubber (X-IIR), a brominated isobutylene-p-methylstyrene copolymer (Br-IPSM, Exxpro 3035, manufactured by Exxon Mobil Chemical), etc. One or more of the above-described butyl-based rubbers may be used. The copolymer may have any form such as a random copolymer and a block copolymer. Among them, a random copolymer is preferable.
Butyl rubbers (IIRs) refer to non-halogenated butyl rubbers and reclaimed butyl rubbers, known as so-called regular butyl rubbers. Any IIR that is commonly used in the tire industry can be preferably used.
Halogenated butyl rubbers (X-IIRs) refer to regular butyl rubbers having a halogen introduced into the molecules. As the halogenated butyl rubber, brominated butyl rubber (Br-IIR), chlorinated butyl rubber (Cl-IIR), etc., can be used. Among them, Br-IIR is preferable because Br-IIR is easily sulfur-crosslinked without natural rubber.
The butyl-based rubber preferably includes at least one selected from the group consisting of a butyl rubber (IIR) and a halogenated butyl rubber (X-IIR). Among them, X-IIR is preferable because a sufficient vulcanization reaction occurs.

(Other rubber components)

Examples of another rubber component that is contained in addition to the butyl-based rubber, include an isoprene-based rubber, butadiene rubber (BR), styrene butadiene rubber (SBR), styrene isoprene butadiene rubber (SIBR), chloroprene rubber (CR), and acrylonitrile butadiene rubber (NBR). Among them, an isoprene-based rubber is

preferable because an isoprene-based rubber is easily sulfur-crosslinked. Each of these rubber components may be used alone, or two or more of them may be used in combination.

Examples of the above-described isoprene-based rubber include isoprene rubber (IR), natural rubber (NR), and a modified natural rubber. Among them, NR is preferable. Examples of the modified natural rubber include epoxidized natural rubber (ENR), hydrogenated natural rubber (HNR), and grafted natural rubber. As NR, NR that is commonly used in the tire industry, such as SIR20, RSS#3, and TSR20, can be used.

(Content)

The content of the butyl-based rubber in the rubber component is not less than 70 mass% with respect to 100 mass% of the rubber component, and is preferably not less than 80 mass%, even more preferably not less than 90 mass%, and still even more preferably 100 mass% in view of providing excellent air permeation resistance.

When the rubber component is used in a tire vulcanization bladder, an IIR, an X-IIR, or CR is typically used as the rubber component. Preferably, at least one of an IIR and an X-IIR is used because excellent durability and air permeation resistance are provided. In this case, the content is preferably not less than 70 mass%, more preferably not less than 81 mass%, even more preferably not less than 90 mass%, and still even more preferably 100 mass%, with respect to 100 mass% of the rubber component.

When the rubber composition of the present embodiment is used in an inner liner, the rubber component preferably contains an NR. In this case, the NR content is preferably 5 to 30 mass%, more preferably 10 to 25 mass%, with respect to 100 mass% of the rubber component in view of low fuel consumption, moldability, and air permeation resistance.

<Hydrogenated rosin resin>

The rubber composition of the present embodiment is characterized by containing a hydrogenated rosin resin. A hydrogenated rosin resin is obtained by hydrogenating a rosin resin. A rosin resin can be hydrogenated using a known method.

In the description herein, the rosin resin refers to a type of natural resin that contains, as a constituent component, a diterpene resin acid, such as abietic acid, levopimaric acid, neoabietic acid, palustric acid, isopimaric acid, sandaracopimaric acid, pimaric acid, dehydroabietic acid, dihydroabietic acid, or dextropimaric acid, and has a carboxyl group and a double bond in the molecule, and the rosin resin may be an ester derivative or modified product thereof. Examples of such an ester derivative include glycerol ester, pentaerythritol ester, dipentaerythritol ester, methyl ester, ethylene glycol ester, diethylene glycol ester, and triethylene glycol ester. Examples of such a modified product include rosin-modified phenol resin, and maleic acid modified rosin resin.

An ester derivative of a hydrogenated rosin resin may be obtained by hydrogenating a rosin resin and then esterifying the hydrogenated rosin resin, or by esterifying a rosin resin and then hydrogenating the esterified rosin resin. A modified product of a hydrogenated rosin resin may be similarly obtained.

When a rosin resin is hydrogenated, the hydrogenated rosin resin has a reduced SP (solubility parameter) value, and therefore, are highly compatible with the butyl-based rubber, which has a lower SP value than those of other diene rubbers. The durability of a rubber composition is evaluated in terms of a plurality of properties, such as elongation at break (EB), low-temperature embrittlement, and crack growth. A rubber composition that contains a hydrogenated rosin resin and a rubber component containing not less than 70 mass% of a butyl-based rubber, has excellent EB and low-temperature embrittlement resistance because of excellent compatibility between the hydrogenated rosin resin and the butyl-based rubber, and thereby, has improved durability. Thus, the addition of a hydrogenated rosin resin allows the rubber composition to have excellent durability, moldability, and air permeation resistance.

The hydrogenated rosin resin of the present embodiment is obtained by hydrogenating the above-described rosin resin. The hydrogenated rosin resin that is esterified is preferable. In particular, the hydrogenated rosin resin that is esterified with glycerol (hydrogenated rosin glycerol ester) is preferable.

In the present embodiment, as the hydrogenated rosin resin, for example, a commercially available product, such as HARITACK SE10, HARITACK F85, or HARITACK FK125, manufactured by Harima Chemicals Group, Inc., can be preferably used. Alternatively, for example, a commercially available rosin resin can be hydrogenated to obtain a hydrogenated rosin resin. Such a commercially available rosin resin is a non-hydrogenated rosin resin, such as one manufactured by Arakawa Chemical Industries, Ltd., or Arizona Chemical, which can be used after being hydrogenated.

Each hydrogenated rosin resin may be used alone, or two or more hydrogenated rosin resins may be used in combination.

In order to advantageously achieve the effect of the present invention, the hydrogenated rosin resin content is preferably not less than 1 part by mass, more preferably not less than 2 parts by mass, even more preferably not less than 3 parts by mass, and particularly preferably not less than 4 parts by mass, with respect to 100 parts by mass of the

rubber component. The hydrogenated rosin resin content is also preferably not more than 40 parts by mass, more preferably not more than 30 parts by mass, and even more preferably not more than 25 parts by mass, in view of breaking strength, Hs, moldability, and low-temperature embrittlement resistance.

The glass transition temperature (Tg) of the hydrogenated rosin resin is preferably not higher than 70°C, more preferably not higher than 67°C, and even more preferably not higher than 65°C, in order to prevent deterioration of crack resistance, in particular, low-temperature crack resistance, that occurs when the glass transition temperature of the rubber composition is high. Although the lower limit of the glass transition temperature of the hydrogenated rosin resin is not particularly limited, the glass transition temperature of the hydrogenated rosin resin is preferably not lower than 5°C, because the hydrogenated rosin resin can have a weight average molecular weight (Mw) that is greater than or equal to that of oil, and have low volatility. The glass transition temperature is measured using a differential scanning calorimeter (DSC).

The weight average molecular weight of the hydrogenated rosin resin is preferably not less than 200 in view of inhibition of volatility at high temperature, and is more preferably not less than 400 in view of maintaining the flexibility of a rubber product in use.

The softening point of the hydrogenated rosin resin, which depends on the impurity content, is typically preferably not higher than 130°C in view of improving compatibility with the rubber component. Meanwhile, the lower limit of the softening point of the hydrogenated rosin resin, which is not particularly limited as long as the effect of the present invention is not impaired, is preferably not lower than 70°C, more preferably not lower than 75°C, and even more preferably not lower than 80°C. The softening point of the resin is determined using a flow tester (CFT-500D, manufactured by Shimadzu Corporation) as follows. One gram of the resin as a sample is extruded through a nozzle having a diameter of 1 mm and a length of 1 mm while being heated at a temperature rise rate of 6°C/min, with a load of 1.96 MPa being applied thereto using a plunger. Distances by which the plunger of the flow tester is moved down are plotted against temperatures. The softening point is determined as a temperature at which the half of the sample has flowed out.

The SP value of the hydrogenated rosin resin is preferably close to 7.7 to 8.1, which are the SP values of the butyl-based rubber, and is preferably not more than 8.6, more preferably not more than 8.5, and even more preferably not more than 8.3. Meanwhile, the SP value is preferably not less than 7.0, more preferably not less than 7.5, and even more preferably not less than 7.7. The SP value means a solubility parameter. The compatibility between two components becomes better with a decrease in the difference in SP value therebeteween. The compatibility between a butyl-based rubber and a hydrogenated rosin resin is excellent when the difference in SP value therebetween is less than 1.0, and more excellent when not more than 0.5. In the description herein, the SP values of a hydrogenated rosin resin and a non-hydrogenated rosin resin are estimated from the height of a Tg value (peak tan$\delta$) that is obtained when a viscoelasticity test is performed on a butyl-based rubber compound, or the result of transparency evaluation performed by the rubber component and the resin being dissolved in a solvent and dried. In the description herein, the SP values of the butyl-based rubber and resins other than the above-described hydrogenated rosin resins and non-hydrogenated rosin resins represent solubility parameters which are calculated using the Hoy method on the basis of the compound structure. The Hoy method is a calculation method described in, for example, K. L. Hoy, "Table of Solubility Parameters", Solvent and Coatings Materials Research and Development Department, Union Carbide Corp. (1985).

The acid value (mgKOH/g) of the hydrogenated rosin resin is preferably not less than 5.7, more preferably not less than 5.9, even more preferably not less than 6.0, and particularly preferably not less than 6.1, because such an acid value allows compatibility with carbon, i.e., elongation at break (EB) to become good. The acid value (mgKOH/g) of the hydrogenated rosin resin is also preferably not more than 10.0, more preferably not more than 8.0, and even more preferably not more than 7.8, because such an acid value allows compatibility with the butyl-based rubber to become good, and viscosity is stable. In the present embodiment, the acid value means the amount of potassium hydroxide that is required to neutralize acids contained in one gram of a resin and is expressed in milligrams, and is measured using a potentiometric titration method (JIS K 0070: 1992).

<Other compounding ingredients>

The rubber composition of the present embodiment can contain, in addition to the above-described components, compounding ingredients that are commonly used in production of a rubber composition, such as carbon black, silica, another inorganic filler, a resin component other than the hydrogenated rosin resin, oil, zinc oxide, stearic acid, an antioxidant, wax, a vulcanizing agent, and a vulcanization accelerator, as appropriate.

(Carbon blacks)

Examples of the above-described carbon black include, but are not particularly limited to, SAF, ISAF, HAF, FF, FEF, GPF, and SRF-LM, which are commonly used in the tire industry.

Among them, a large particle size carbon black having a nitrogen adsorption specific surface area ($N_2SA$) of

not greater than 40 $m^2$/g is preferable because excellent air permeation resistance and durability are provided. The lower limit of the $N_2SA$ of the large particle size carbon black, which is not particularly limited, is preferably not less than 20 $m^2$/g. Specific examples of the large particle size carbon black include SHOBLACK N762 ($N_2SA$: 29 $m^2$/g), manufactured by Cabot Japan, Statex N660 ($N_2SA$: 35 $m^2$/g), manufactured by Jiangxi Black Cat, and SHOBLACK N660 ($N_2SA$: 35 $m^2$/g), manufactured by Cabot Japan. Each of them can be used alone, or two or more of them may be used in combination. The nitrogen adsorption specific surface area of the carbon black is measured by the BET method in accordance with ASTMD 3037-81.

When a tire vulcanization bladder is formed of the rubber composition of the present embodiment, the rubber composition is required to have an improved rubber strength that is achieved by carbon black, and thereby have excellent durability, which is prioritized compared to air permeation resistance, and therefore, the carbon black used preferably has a nitrogen adsorption specific surface area ($N_2SA$) of 40 to 200 $m^2$/g.

When carbon black is contained, the carbon black content is preferably not less than 20 parts by mass, more preferably not less than 25 parts by mass, even more preferably not less than 30 parts by mass, and particularly preferably not less than 35 parts by mass, with respect to 100 parts by mass of the rubber component, because good reinforcement and crack growth resistance effects are obtained due to the carbon black being contained. The carbon black content is also preferably not more than 100 parts by mass, more preferably not more than 90 parts by mass, even more preferably not more than 80 parts by mass, and particularly preferably not more than 75 parts by mass, because the reinforcement effect is ensured.

(Silica)

As the above-described silica, silica that is commonly used in the tire industry may be added. However, a silane coupling agent is added together with the silica, resulting in an increase in cost. When a sheet is produced by extrusion, silica that is not covered by a silane coupling agent reaggregates, so that sheet processability deteriorates. Therefore, silica is preferably not used.

(Other inorganic filler)

The other inorganic filler described above refers to an inorganic filler that is commonly used in the rubber industry and is other than carbon black and silica. Examples of the above-described "other inorganic filler" include aluminium hydroxide, talc, clay, graphite, and mica. Among them, an oblate inorganic filler is preferable because an oblate inorganic filler blocks an air permeation path and thereby provides excellent air permeation resistance. Oblate aluminium hydroxide and oblate talc fillers are preferable, and an oblate talc filler is particularly preferable, because moldability is also excellent. One or more of the other inorganic fillers can be used. One or more aluminium hydroxides, talcs, clays, graphites, or micas can be used.

<<Aluminium hydroxide>>

Any aluminium hydroxide that is commonly used in this field can be preferably used. As oblate aluminium hydroxide, an oblate aluminium hydroxide that is industrially produced from bauxite and has an oblateness of 5 to 30 and an average particle size of not greater than 1.0 $\mu$m, is preferable because more excellent air permeation resistance and molding adhesiveness are provided. By the oblate aluminium hydroxide being added to the rubber composition, good air permeation resistance can be obtained because the oblate aluminium hydroxide blocks an air permeation path.

The average particle size of the oblate aluminium hydroxide is preferably not greater than 1.0 $\mu$m, and more preferably not greater than 0.9 $\mu$m. The lower limit of the average particle size is not particularly limited. The average particle size of the aluminium hydroxide is the value of d50 that is obtained from a cumulative curve in a secondary aggregation distribution measurement.

The oblateness of the oblate aluminium hydroxide is preferably 5 to 30, and more preferably 10 to 30. The oblateness of the aluminium hydroxide is obtained by analysis of a scanning electron microscopic (SEM) image.

The nitrogen adsorption specific surface area ($N_2SA$) of the oblate aluminium hydroxide is preferably 3 to 100 $m^2$/g, and more preferably 10 to 60 $m^2$/g, because reaggregation is less likely to occur, and even a single particle is less likely to become a fracture nucleus. The nitrogen adsorption specific surface area of the aluminium hydroxide is measured by the BET method in accordance with ASTMD 3037-81.

The Mohs hardness of the oblate aluminium hydroxide is preferably not more than three, because facility is less abraded. Mohs hardness, which is one of mechanical properties of a material, is a measure that has been widely used in the field of mineral for a long time. Ten kinds of minerals described below are successively used to try to scratch a sample. If the sample is scratched by a mineral, it is determined that the hardness of the sample is lower than the hardness of that mineral. The ten minerals are described in order starting from the lowest hardness. 1: Talc, 2: Gypsum,

3: Calcite, 4: Fluorite, 5: Apatite, 6: Orthoclase, 7: Quartz (silica), 8: Topaz, 9: Corundum (alumina), 10: Diamond

<<Talc>>

Talc is inorganic powder containing hydrous magnesium silicate as a main component. In the present embodiment, oblate talc refers to talc having an oblateness in the range of 3 to 100. When the oblateness is in the above range, crack growth is less likely to deteriorate. The oblateness is preferably not less than 5, and the upper limit of the oblateness is preferably not more than 50. When the oblate talc is added to the rubber composition, the oblate talc blocks an air permeation path, resulting in good air permeation resistance.
The average particle size of the oblate talc is preferably, for example, not greater than 250 μm, more preferably not greater than 50 μm, and even more preferably not greater than 30 μm, in view of durability, molding adhesiveness, and air permeation resistance. The lower limit of the average particle size is not particularly limited, and is preferably not less than 1 μm, because the manufacturing cost is low. The average particle size of the oblate talc is derived from values measured by a laser diffraction particle size distribution measurement.
The oblateness of the oblate talc is preferably 5 to 200, more preferably 100 to 150, and even more preferably 125 to 145. The oblateness of the oblate talc is calculated by dividing the above-described average particle size by a thickness of the oblate talc. In the description herein, the "thickness of the oblate talc" refers to a value obtained by measuring thicknesses of any 20 particles and performing the arithmetic average of measured thicknesses with the use of an SEM image.
The $N_2SA$ of the oblate talc is preferably 3 to 100 $m^2/g$, more preferably 10 to 60 $m^2/g$, and even more preferably 15 to 30 $m^2/g$, because reaggregation is less likely to occur, and even a single particle is less likely to become a fracture nucleus. The $N_2SA$ of the talc is measured in a manner similar to that for the aluminium hydroxide.
The oblate talc can, for example, be obtained by finely pulverizing naturally-occurring talc. Examples of the pulverization method include, but are not particularly limited to, dry pulverization and wet pulverization. Among them, wet pulverization is preferable because the oblate talc having the above-described average particle size, oblateness, and $N_2SA$ is preferably obtained. The oblate talc used in the present embodiment can be either a naturally-occurring one or a synthetic one.
In the present embodiment, as the oblate talc, for example, a commercially available product such as MISTRON HAR, manufactured by Imerys Talc, can be preferably used.

<<Clay>>

Examples of the clay include hard clay, soft clay, and kaolin clay. Examples of the kaolin clay include wet kaolin, calcined kaolin, and dry kaolin.

<<Graphite>>

Graphite refers to layered black lead having a hexagonal crystalline structure, excluding carbon black, etc. The graphite used herein is not particularly limited. Any graphite that is commonly used in conventional tire rubber compositions may be used, including those that have the following average oblateness and average particle size.
The graphite preferably has an average oblateness (the ratio of the major axis length to the thickness) of not less than 3, and preferably not less than 5, and more preferably not less than 10, in view of sufficient rubber hardness. The average oblateness of the graphite is also preferably not greater than 80, and more preferably not greater than 30, in view of breaking strength. Although not particularly limited, the graphite is observed using an electron microscope, the major axis lengths and thicknesses of any 50 particles are measured, and the average oblateness is calculated as a/b from the average major axis length (a) and the average thickness (b), for example.
The graphite has an average particle size of not less than 2 μm, and preferably not less than 5 μm, more preferably not less than 10 μm, in view of sufficient rubber hardness. The graphite has an average particle size of not greater than 80 μm, and preferably not greater than 50 μm, in view of bending fatigue resistance. The average particle size of the graphite refers to the above-described average major axis length (a).

<<Mica>>

The above-described mica is preferably at least one selected from the group consisting of muscovite (white mica), phlogopite (bronze mica), and biotite (black mica). Among them, phlogopite is preferably used because phlogopite has a greater oblateness than those of the other micas and therefore provides an excellent air blocking effect.
The average particle size of the mica is not less than 40 μm, and preferably not less than 45 μm, in view of improving air permeation resistance. The average particle size of the mica is also not greater than 100 μm, and preferably

not greater than 70 μm, in view of bending fatigue properties.

The surface of the mica may be covered with a resin. Examples of the covering resin include urethane resin, acrylic resin, epoxy resin, nylon resin, and polyester resin. Among them, urethane resin, acrylic resin, and epoxy resin are preferable because of relatively high compatibility with rubber. As a covering method, a resin is melted, the mica is placed in the resin, the mixture is stirred, then coagulated, and pulverized, for example.

The mica has an oblateness of not less than 50, and preferably not less than 55, in view of improving air permeation resistance. The mica also has an oblateness of preferably not greater than 100, and more preferably not greater than 70, in view of the strength of the mica. In the description herein, the oblateness of the mica refers to the ratio of the major axis length to the thickness of the mica.

The mica can be obtained by a pulverization method, such as wet pulverization and dry pulverization. Wet pulverization can provide a smooth surface and a relatively high effect of improving air permeation resistance. Dry pulverization can provide simple and low-cost production. According to the respective characteristics, one of the two methods may be suitably used depending on a case.

<<Content of the other inorganic filler>>

The other inorganic filler described above may be added separately from the carbon black or as at least a portion of the carbon black. When the other inorganic filler is added, the inorganic filler content is preferably not less than 10 parts by mass, and more preferably not less than 15 parts by mass, with respect to 100 parts by mass of the rubber component, in view of air permeation resistance, moldability, and durability. The inorganic filler content is also preferably not more than 50 parts by mass, more preferably not more than 40 parts by mass, and even more preferably not more than 30 parts by mass, with respect to 100 parts by mass of the rubber component, in order to prevent deterioration of reinforcement and crack growth resistance effects which are provided by the addition of the carbon black, and prevent increase in the glass transition temperature of the rubber composition, which causes deterioration of crack resistance, in particular, low-temperature crack resistance.

(Resin component other than the hydrogenated rosin resin)

The rubber composition of the present embodiment can contain, as appropriate, a "resin other than the hydrogenated rosin resin" in addition to the hydrogenated rosin resin. Among them, a "resin having a glass transition temperature (Tg) of not lower than 40°C" is preferably contained in view of moldability and air permeation resistance.

The resin having the Tg of not lower than 40°C refers to a resin that is commonly used in the rubber industry and has a Tg of not lower than 40°C. Examples of the "resin having a Tg of not lower than 40°C" include compatibilized resins, adhesive resins, and crosslinked resins. Among them, compatibilized resins are preferable because excellent airtightness and moldability are provided. The Tg of the resin having a Tg of not lower than 40°C is the Tg of a resin that is commonly used in the rubber industry. The Tg of the resin having a Tg of not lower than 40°C, which is not limited if the Tg is not lower than 40°C, is preferably not lower than 42°C, more preferably not lower than 43°C, and even more preferably not lower than 50°C. One or more kinds of the resins having a Tg of not lower than 40°C can be used.

<<Compatibilized resin>>

The rubber composition of the present embodiment preferably contains a compatibilized resin. In the present embodiment, the compatibilized resin refers to a resin that has good affinity to both a rubber and a filler, and therefore, can reduce voids around the filler, thereby contributing to improvement in air permeation resistance and durability. The compatibilized resin is not particularly limited. Examples of the compatibilized resin include terpene-based resins, rosin-based resins, hydrogenated terpene-based resins, and ethylene-propylene-styrene copolymer resins. The compatibilized resins may be used in combination. Among them, the rubber composition of the present embodiment more preferably contains an ethylene-propylene-styrene copolymer resin in view of improving the durability of the resultant rubber composition, and low cost.

The ethylene-propylene-styrene copolymer resin, which is a copolymer resin obtained by polymerizing a styrene monomer, an ethylene monomer, and a propylene monomer, contains structural units represented by a general formula described below (where m, n, and o each represent an integer of not less than one). When the rubber composition contains the ethylene-propylene-styrene copolymer resin, the durability is maintained to substantially the same extent as when a terpene-based resin is contained, and the adhesiveness of the rubber surface is less likely to increase during production of a vulcanization bladder, so that a defect that is caused by excessive adhesion between the rubber composition and a bladder mold is less likely to occur.

[Chemical formula 1]

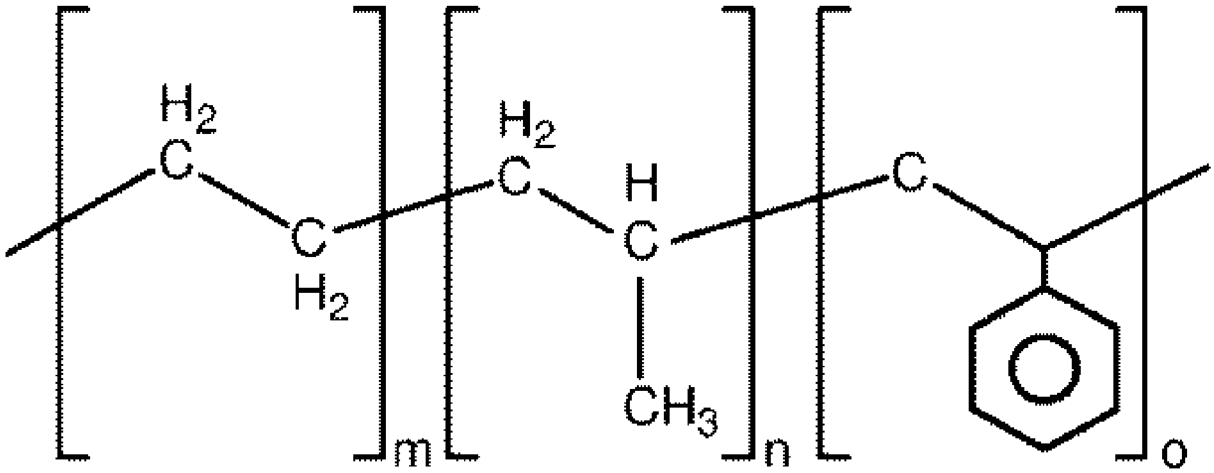

The total amount of the structural units derived from ethylene and the structural units derived from propylene (EP content: the sum of m and n, in the above-described formula, with respect to the number of all structural units) in the ethylene-propylene-styrene copolymer resin is not particularly limited. As an example, the total amount is preferably not less than 60 mol%, and more preferably not less than 70 mol%, with respect to 100 mol% of the structural units, in view of eliminating voids between the butyl-based rubber and the filler, and improving air permeation resistance. The total amount is also preferably not more than 98 mol%, and more preferably not more than 95 mol%, with respect to 100 mol% of the structural units, in view of tensile characteristics. Ethylene and propylene are both compatible with the butyl-based rubber. Styrene is compatible with carbon black. Therefore, when the EP content falls within the above-described range, air permeation resistance and EB can be improved in a well-balanced manner.

In the present embodiment, a commercially available ethylene-propylene-styrene copolymer resin may be used. Examples of such a commercially available product include those manufactured by and commercially available from Struktol, Performance Additive, and Lanxess.

<<Adhesive Resin>>

The adhesive resin is not particularly limited. The addition of an adhesive resin improves the adhesiveness (moldability) of an unvulcanized product during tire molding. Examples of the adhesive resin include non-reactive alkylphenol resins, C5 petroleum resins, and coumarone-indene resins. The adhesive resins may be used in combination.

<<Crosslinked Resin>>

The crosslinked resin is not particularly limited. Use of a crosslinked resin provides a vulcanization rate, a crosslink density, and crosslink uniformity, which leads to good bladder lifespan. Examples of the crosslinked resin include alkylphenol formaldehyde resins. The alkylphenol formaldehyde resin is not particularly limited. As an example, the alkylphenol formaldehyde resins that are not halogenated, i.e., non-halogenated alkylphenol formaldehyde resins, are preferable because excellent resistance to heat is provided. The methylol group content of the alkylphenol formaldehyde resin is typically 7 to 10 mass%. The crosslinked resins may be used in combination.

<<Content>>

When a resin having a Tg of not lower than 40°C is contained, the resin content is 0 to 30 parts by mass with respect to 100 parts by mass of the rubber component. The resin content is preferably not less than 1 part by mass, more preferably not less than 2 parts by mass, and even more preferably not less than 3 parts by mass, and preferably not more than 20 parts by mass, more preferably not more than 15 parts by mass, even more preferably not more than 10 parts by mass, and still even more preferably not more than 9 parts by mass, in view of ensuring crack resistance while maximizing air permeation resistance.

(Oil)

The oil is not particularly limited. Examples of the oil include paraffin oil, such as process oil and mineral oil, and TDAE oil, which are commonly used in the tire industry. When the rubber composition of the present embodiment is used in a tire vulcanization bladder, castor oil can be used.
Oil that contains a large amount of a paraffin component, such as process oil and mineral oil, have excellent compatibility with the butyl-based rubber, and excellent moldability such as sheet processability, but tends to deteriorate air permeation resistance. Therefore, the oil content is preferably not more than 3 parts by mass with respect to 100 parts by mass of the rubber component. More preferably, such an oil is not contained. Meanwhile, TDAE oil, which is not compatible with butyl-based rubber, tends to excessively bleed on the surface of the rubber composition, and thereby reduces the adhesiveness. Therefore, TDAE oil is preferably not contained.

<Rubber composition, inner liner, pneumatic tire, and tire vulcanization bladder>

The rubber composition of the present embodiment can be produced using a commonly used method. For example, the rubber composition of the present embodiment can be produced by kneading the above-described components excluding a crosslinking agent and the vulcanization accelerator, using a known kneader that is commonly used in the rubber industry, such as a Banbury mixer, a kneader, or an open roll, and thereafter, adding the crosslinking agent and the vulcanization accelerator to the mixture, further kneading the resultant mixture, and thereafter, vulcanizing the mixture.
A pneumatic tire having the inner liner of the present embodiment can be produced by a commonly used method using the above-described rubber composition. Specifically, the rubber composition is extruded and processed into the shape of an inner liner, is in turn molded on a tire molding machine using a commonly used method, and is adhered to other tire members to form an unvulcanized tire. The unvulcanized tire is heated and pressurized in a vulcanization machine. Thus, a pneumatic tire having the inner liner of the present embodiment can be produced.
The tire vulcanization bladder of the present embodiment may be formed of the above-described rubber composition. The vulcanization bladder may be produced using a commonly used method. As an example, an unvulcanized rubber composition for the vulcanization bladder is extrusion-molded into a cylindrical or quadrangular shape, using an extruder, and the molded composition is placed on a mold press, and is molded by heating and pressurizing, thereby producing the tire vulcanization bladder.

[Examples]

The present invention will be specifically described on the basis of examples, but the present invention is not construed as being limited thereto.
Chemicals used in examples and comparative examples will be described.

Br-IIR: Bromobutyl Rubber 2255 (SP value: 7.8, Tg: -71), manufactured by Exxon Chemical
NR: TSR20 (SP value: 8.05, Tg: -74) produced in Malaysia
Carbon black 1: SHOBLACK N660 ($N_2SA$: 35 $m^2/g$), manufactured by Cabot Japan
Carbon black 2: SHOBLACK N762 ($N_2SA$: 29 $m^2/g$), manufactured by Cabot Japan
Aluminium hydroxide: APYRAL 200 SM (average particle size: 0.6 $\mu$m, oblateness: 15, $N_2SA$: 15 $m^2/g$, and Mohs hardness: 3), manufactured by Sumitomo Chemical Co., Ltd.
Talc: MISTRON HAR (BET specific surface area: 20 $m^2/g$, particle size by laser method ($D_{L50}$): 6.7 $\mu$m, oblateness: 143), manufactured by Imerys Talc
Process oil: Diana Process Oil PA32 (paraffin component: 67 mass%, naphthene component: 28 mass%, aromatic component: 5 mass%, SP value: 7.8, Tg: -66), manufactured by Idemitsu Kosan Co., Ltd.
Alkylphenol resin: SP1068 Resin (SP value: 11, softening point: 94°C, Tg: 60, weight average molecular weight (Mw): 2225, number-average molecular weight (Mn): 1053), manufactured by Schenectady
Compatibilized resin: 40MS (terpolymer containing ethylene, propylene, and styrene, SP value: 8.9, softening point: 101°C, Tg: 58°C), manufactured by Struktol
Hydrogenated rosin resin 1: HARITACK SE10 (stabilized rosin ester, SP value (estimated): 8.3, softening point: 82, Tg: 40, acid value: 6.1), manufactured by Harima Chemicals Group, Inc.
Hydrogenated rosin resin 2: HARITACK F85 (stabilized rosin ester, SP value (estimated): 8.3, softening point: 87, Tg: 45, acid value: 7.8), manufactured by Harima Chemicals Group, Inc.
Hydrogenated rosin resin 3: HARITACK FK125 (stabilized rosin ester, SP value (estimated): 8.3, softening point: 125, Tg: 65, acid value: 7.8), manufactured by Harima Chemicals Group, Inc.
Non-hydrogenated rosin resin 1: HARIESTER TF (rosin modified glycerol ester, SP value (estimated): 9.0, softening

point: 80, Tg: 42, acid value: 8.2), manufactured by Harima Chemicals Group, Inc.
Non-hydrogenated rosin resin 2: HARIMACK T-80 (rosin modified maleic acid resin, SP value (estimated): 11, softening point: 85, Tg: 43, acid value: 185), manufactured by Harima Chemicals Group, Inc.
Non-hydrogenated rosin resin 3: HARIESTER P (rosin modified pentaerythritol ester, SP value (estimated): 9.0, softening point: 102, Tg: 62, acid value: 9), manufactured by Harima Chemicals Group, Inc.
Hydrogenated polyterpene resin: P85 (SP value: 8.36, softening point: 85°C, Tg: 43), manufactured by Yasuhara Chemical Co., Ltd.
Non-hydrogenated polyterpene resin: PX800 (SP value: 8.42, softening point: 80°C, Tg: 42), manufactured by Yasuhara Chemical Co., Ltd.
Zinc oxide: Two kinds of zinc oxides manufactured by Mitsui Mining & Smelting Co., Ltd.
Stearic acid: Stearic acid Tsubaki, manufactured by NOF Corporation
Antioxidant: NOCRAC 224 (2,2,4-trimethyl-1,2-dihydroquinoline polymer), manufactured by Ouchi Shinko Chemical Industrial, Co., Ltd.
Sulfur: HK200-5 (oil content: 5 mass%), manufactured by Hosoi Chemical Industry Co., Ltd.
Vulcanization accelerator: NOCCELER DM (di-2-benzothiazolyl disulfide), manufactured by Ouchi Shinko Chemical Industrial, Co., Ltd.

Examples and Comparative Examples

The chemicals, other than the sulfur and the vulcanization accelerator, among material to be blended were kneaded for 5 minutes using a 1.7-L Banbury mixer, until the discharge temperature became 160°C, to obtain a kneaded product, where the blending formulation is indicated in Table 1 to 4. Next, the sulfur and the vulcanization accelerator were added to the obtained kneaded product, and the resultant kneaded product was kneaded for 4 minutes using a twin-screw open roll, until the temperature became 95°C, to obtain an unvulcanized rubber composition. The unvulcanized rubber composition thus obtained was extrusion-molded into a predetermined shape, and then press-vulcanized at 170°C for 12 minutes, to obtain a vulcanized rubber composition. Rubber test pieces suitable for test purposes described below were produced using the unvulcanized rubber composition and the vulcanized rubber composition, and were evaluated.

Moldability test

The evaluation results of an "adhesiveness test" and a "sheet flatness test" described below are compared with the evaluation result of comparative example 1, and are indicated as indexes, where the result of comparative example 1 is 100. The greater the index is, the more excellent moldability is. A target performance value of the moldability index is not less than 100.

"Adhesiveness test"

The above-described unvulcanized rubber composition was extruded using a roll into the shape of a sheet having a thickness of 1 mm. Adhesiveness (tackiness) between the obtained rubber sheet and a metal flat plate sensor was measured using a tack tester ("Tack Tester II", manufactured by Toyo Seiki Seisaku-sho, Ltd.).

"Sheet flatness test"

The above-described unvulcanized rubber composition was extruded using a roll into the shape of a sheet having a thickness of 2 mm. The flatness of the obtained rubber sheet was visually observed.

Durability test

Tensile testing was conducted on No. 3 dumbbell type test piece formed of each vulcanized rubber composition in accordance with JIS K 6251. The elongation at break (EB) of each test piece was measured, and indicated as an index, where the value of comparative example 1 is 100. The greater the index is, the greater rubber strength is and the more excellent durability is. A target performance value of the durability index is not less than 100.

Airtightness test

The air permeability coefficient at 20°C of each vulcanized rubber composition was calculated from the result of measurement that was conducted using a gas permeability measurement device (GTR-11A/31A, manufactured by

GTR Tec Corporation) in accordance with JIS K 7126-1: 2006. The less the air permeability coefficient is, the less an air permeation amount of the vulcanized rubber composition is and the more excellent airtightness is. The airtightness of each of the rubber compositions having blended contents is expressed as an index obtained by an expression described below. The greater the airtightness index is, the less an air permeation amount of the vulcanized rubber composition is and the more excellent airtightness (air permeation resistance) is. A target performance value of the airtightness index is not less than 105.

(Airtightness index) = (air permeability coefficient of rubber composition of comparative example 1)/(air permeability coefficient of each of rubber compositions having blended contents) × 100

[Table 1]

| | | Examples | | | | | | | | | |
|---|---|---|---|---|---|---|---|---|---|---|---|
| | | 1 | 2 | 3 | 4 | 5 | 6 | 7 | 8 | 9 | 10 |
| Blended contents (parts by mass) | Br-IIR | 100 | 100 | 100 | 100 | 100 | 100 | 100 | 100 | 100 | 100 |
| | NR | - | - | - | - | - | - | - | - | - | - |
| | Carbon black 1 | 60 | 60 | 60 | 60 | 60 | 60 | 60 | 60 | 60 | 60 |
| | Carbon black 2 | - | - | - | - | - | - | - | - | - | - |
| | Aluminium hydroxide | - | - | - | - | - | - | - | - | - | - |
| | Talc | - | - | - | - | - | - | - | - | - | - |
| | Process oil | - | - | - | - | - | - | - | - | - | - |
| | Alkylphenol resin | - | - | - | - | - | - | - | - | - | - |
| | Compatibilized resin | 5 | 5 | 5 | 5 | 5 | 5 | 5 | 5 | - | - |
| | Hydrogenated rosin resin 1 | 2 | 5 | 10 | 15 | - | - | - | - | 7 | 10 |
| | Hydrogenated rosin resin 2 | - | - | - | - | 2 | 5 | 10 | 15 | - | - |
| | Hydrogenated rosin resin 3 | - | - | - | - | - | - | - | - | - | - |
| | Non-hydrogenated rosin resin 1 | - | - | - | - | - | - | - | - | - | - |
| | Non-hydrogenated rosin resin 2 | - | - | - | - | - | - | - | - | - | - |
| | Non-hydrogenated rosin resin 3 | - | - | - | - | - | - | - | - | - | - |
| | Hydrogenated polyterpene resin | - | - | - | - | - | - | - | - | - | - |
| | Non-hydrogenated polyterpene resin | - | - | - | - | - | - | - | - | - | - |
| | Zinc oxide | 1 | 1 | 1 | 1 | 1 | 1 | 1 | 1 | 1 | 1 |
| | Stearic acid | 1 | 1 | 1 | 1 | 1 | 1 | 1 | 1 | 1 | 1 |
| | Antioxidant | 1 | 1 | 1 | 1 | 1 | 1 | 1 | 1 | 1 | 1 |
| | Sulfur (5% oil-containing sulfur) | 0.53 | 0.53 | 0.53 | 0.53 | 0.53 | 0.53 | 0.53 | 0.53 | 0.53 | 0.53 |
| | Vulcanization accelerator | 1.05 | 1.05 | 1.05 | 1.05 | 1.05 | 1.05 | 1.05 | 1.05 | 1.05 | 1.05 |
| Evaluation results | Moldability index | 100 | 102 | 110 | 112 | 100 | 103 | 110 | 112 | 108 | 110 |
| | Durability index (EB) | 103 | 110 | 114 | 117 | 103 | 111 | 115 | 118 | 104 | 112 |
| | Airtightness index | 106 | 115 | 116 | 113 | 107 | 116 | 117 | 114 | 108 | 115 |

[Table 2]

| | | Examples | | | | | |
|---|---|---|---|---|---|---|---|
| | | 11 | 12 | 13 | 14 | 15 | 16 |
| Blended contents (parts by mass) | Br-IIR | 100 | 100 | 100 | 100 | 100 | 80 |
| | NR | - | - | - | - | - | 20 |
| | Carbon black 1 | 60 | 60 | 60 | 55 | 55 | - |
| | Carbon black 2 | - | - | - | - | - | 75 |
| | Aluminium hydroxide | - | - | - | 15 | - | - |
| | Talc | - | - | - | - | 15 | - |
| | Process oil | - | - | - | - | - | - |
| | Alkylphenol resin | - | - | - | - | - | - |
| | Compatibilized resin | - | - | 5 | 5 | 5 | 5 |
| | Hydrogenated rosin resin 1 | 15 | 20 | - | 5 | 5 | 5 |
| | Hydrogenated rosin resin 2 | - | - | - | - | - | - |
| | Hydrogenated rosin resin 3 | - | - | 5 | - | - | - |
| | Non-hydrogenated rosin resin 1 | - | - | - | - | - | - |
| | Non-hydrogenated rosin resin 2 | - | - | - | - | - | - |
| | Non-hydrogenated rosin resin 3 | - | - | - | - | - | - |
| | Hydrogenated polyterpene resin | - | - | - | - | - | - |
| | Non-hydrogenated polyterpene resin | - | - | - | - | - | - |
| | Zinc oxide | 1 | 1 | 1 | 1 | 1 | 1 |
| | Stearic acid | 1 | 1 | 1 | 1 | 1 | 1 |
| | Antioxidant | 1 | 1 | 1 | 1 | 1 | 1 |
| | Sulfur (5% oil-containing sulfur) | 0.53 | 0.53 | 0.53 | 0.53 | 0.53 | 0.53 |
| | Vulcanization accelerator | 1.05 | 1.05 | 1.05 | 1.05 | 1.05 | 1.05 |
| Evaluation results | Moldability index | 115 | 117 | 109 | 103 | 100 | 115 |
| | Durability index (EB) | 117 | 119 | 108 | 111 | 105 | 110 |
| | Airtightness index | 112 | 108 | 106 | 120 | 119 | 105 |

[Table 3]

| | | Comparative examples | | | | | | | | |
|---|---|---|---|---|---|---|---|---|---|---|
| | | 1 | 2 | 3 | 4 | 5 | 6 | 7 | 8 | 9 |
| Blended contents (parts by mass) | Br-IIR | 100 | 100 | 100 | 100 | 100 | 100 | 100 | 100 | 100 |
| | NR | - | - | - | - | - | - | - | - | - |
| | Carbon black 1 | 60 | 60 | 60 | 60 | 60 | 60 | 60 | 60 | 60 |
| | Carbon black 2 | - | - | - | - | - | - | - | - | - |
| | Aluminium hydroxide | - | - | - | - | - | - | - | - | - |
| | Talc | - | - | - | - | - | - | - | - | - |
| | Process oil | 5 | - | - | - | - | - | - | - | - |
| | Alkylphenol resin | - | 5 | - | - | - | 2 | 2 | 2 | 2 |
| | Compatibilized resin | 5 | 5 | 5 | 5 | 5 | 5 | 5 | 5 | 5 |
| | Hydrogenated rosin resin 1 | - | - | - | - | - | - | - | - | - |
| | Hydrogenated rosin resin 2 | - | - | - | - | - | - | - | - | - |
| | Hydrogenated rosin resin 3 | - | - | - | - | - | - | - | - | - |
| | Non-hydrogenated rosin resin 1 | - | - | - | - | - | - | 5 | - | - |
| | Non-hydrogenated rosin resin 2 | - | - | - | - | - | - | - | 5 | - |
| | Non-hydrogenated rosin resin 3 | - | - | - | - | - | - | - | - | 5 |
| | Hydrogenated polyterpene resin | - | - | 5 | 10 | 15 | - | - | - | - |
| | Non-hydrogenated polyterpene resin | - | - | - | - | - | 5 | - | - | - |
| | Zinc oxide | 1 | 1 | 1 | 1 | 1 | 1 | 1 | 1 | 1 |
| | Stearic acid | 1 | 1 | 1 | 1 | 1 | 1 | 1 | 1 | 1 |
| | Antioxidant | 1 | 1 | 1 | 1 | 1 | 1 | 1 | 1 | 1 |
| | Sulfur (5% oil-containing sulfur) | 0.53 | 0.53 | 0.53 | 0.53 | 0.53 | 0.53 | 0.53 | 0.53 | 0.53 |
| | Vulcanization accelerator | 1.05 | 1.05 | 1.05 | 1.05 | 1.05 | 1.05 | 1.05 | 1.05 | 1.05 |
| Evaluation results | Moldability index | 100 | 110 | 95 | 98 | 98 | 93 | 100 | 102 | 110 |
| | Durability index (EB) | 100 | 90 | 97 | 98 | 110 | 95 | 98 | 90 | 90 |
| | Airtightness index | 100 | 81 | 109 | 114 | 100 | 105 | 102 | 88 | 82 |

[Table 4]

| | | Comparative examples | | | |
|---|---|---|---|---|---|
| | | 10 | 11 | 12 | 13 |
| Blended contents (parts by mass) | Br-IIR | 100 | 100 | 100 | 80 |
| | NR | - | - | - | 20 |
| | Carbon black 1 | 60 | 60 | 60 | - |
| | Carbon black 2 | - | - | - | 75 |
| | Aluminium hydroxide | - | - | - | - |
| | Talc | - | - | - | - |
| | Process oil | - | - | - | 5 |
| | Alkylphenol resin | 2 | 2 | 2 | - |
| | Compatibilized resin | 10 | 15 | 20 | 5 |
| | Hydrogenated rosin resin 1 | - | - | - | - |
| | Hydrogenated rosin resin 2 | - | - | - | - |
| | Hydrogenated rosin resin 3 | - | - | - | - |
| | Non-hydrogenated rosin resin 1 | - | - | - | - |
| | Non-hydrogenated rosin resin 2 | - | - | - | - |
| | Non-hydrogenated rosin resin 3 | - | - | - | - |
| | Hydrogenated polyterpene resin | - | - | - | - |
| | Non-hydrogenated polyterpene resin | - | - | - | - |
| | Zinc oxide | 1 | 1 | 1 | 1 |
| | Stearic acid | 1 | 1 | 1 | 1 |
| | Antioxidant | 1 | 1 | 1 | 1 |
| | Sulfur (5% oil-containing sulfur) | 0.53 | 0.53 | 0.53 | 0.53 |
| | Vulcanization accelerator | 1.05 | 1.05 | 1.05 | 1.05 |
| Evaluation results | Moldability index | 75 | 80 | 85 | 111 |
| | Durability index (EB) | 99 | 100 | 102 | 102 |
| | Airtightness index | 110 | 112 | 114 | 86 |

As can be seen from the results of Tables 1 to 4, the rubber compositions of the examples that contain a rubber component containing not less than 70 mass% of a butyl-based rubber, and a hydrogenated rosin resin, have excellent air permeation resistance, moldability, and durability. In particular, each of examples 3, 7, and 10 containing 10 parts by mass of a hydrogenated rosin resin has an excellent overall result for air permeation resistance, moldability, and durability. When 2 parts by mass, or not less than 15 parts by mass, of a hydrogenated rosin resin is contained, the airtightness is greater than or equal to the target performance value (not less than 105), and is lower as compared to when 10 parts by mass of a hydrogenated rosin resin is contained (examples 1, 4, 5, 11, 12, etc.). Meanwhile, comparative example 4 containing 10 parts by mass of a hydrogenated polyterpene resin, has an airtightness of 114, which is

equivalent to the result of the case where 10 parts by mass of a hydrogenated rosin resin is contained, but the durability and moldability thereof are less than the target performance value of 100. In the case of comparative examples 7 to 9 that contain a non-hydrogenated rosin resin, the airtightness and durability thereof are both less than the target performance value. This may be because non-hydrogenated rosin resins have a higher SP value than those of hydrogenated rosin resins, and therefore, have poor compatibility with the butyl-based rubber, which has a lower SP value than those of other diene rubbers. Examples 14 and 15 that contain carbon black and another predetermined inorganic filler in combination can maintain high moldability and durability similar to those of examples 1 to 13 and 16 that do not contain another inorganic filler, and have significantly improved airtightness.

Provided are a rubber composition having excellent air permeation resistance, moldability, and durability, an inner liner formed of the rubber composition, a pneumatic tire having the inner liner, and a tire vulcanization bladder formed of the rubber composition. The rubber composition contains a rubber component containing not less than 70 mass% of a butyl-based rubber, and a hydrogenated rosin resin.

## Claims

**1.** A rubber composition comprising:

a rubber component containing not less than 70 mass% of a butyl-based rubber; and
a hydrogenated rosin resin.

**2.** The rubber composition according to claim 1, wherein a content of the hydrogenated rosin resin is 1 to 40 parts by mass with respect to 100 parts by mass of the rubber component.

**3.** The rubber composition according to claim 1 or 2, wherein the hydrogenated rosin resin has a glass transition temperature of not higher than 70°C.

**4.** The rubber composition according to any one of claims 1 to 3, further comprising:

a resin, other than hydrogenated rosin resins, having a glass transition temperature of not lower than 40°C, wherein
a total content of the resin is 0 to 30 parts by mass with respect to 100 parts by mass of the rubber component.

**5.** The rubber composition according to any one of claims 1 to 4, further comprising carbon black.

**6.** The rubber composition according to any one of claims 1 to 5, further comprising at least one selected from the group consisting of aluminium hydroxide, talc, clay, graphite, and mica.

**7.** An inner liner comprising the rubber composition according to any one of claims 1 to 6.

**8.** A pneumatic tire comprising the inner liner according to claim 7.

**9.** A tire vulcanization bladder comprising the rubber composition according to any one of claims 1 to 6.

Europäisches Patentamt
European Patent Office
Office européen des brevets

# EUROPEAN SEARCH REPORT

Application Number
EP 18 17 0022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 875 351 A (FIRESTONE TIRE & RUBBER CO) 16 August 1961 (1961-08-16) * the whole document * ----- | 1-5,9 | INV. C08L23/22 C08L93/04 C08K3/04 C08K3/20 B60C1/00 B29D30/06 |
| X<br>A | CA 621 164 A (SEAMLESS RUBBER CO) 30 May 1961 (1961-05-30) * page 8 - page 9; examples D,H,I * ----- | 1,2,5<br>3,4,6-9 | |
| X | EP 2 749 403 A1 (SUMITOMO RUBBER IND [JP]) 2 July 2014 (2014-07-02) * * see in particular example runs 4-35,4-36.; paragraphs [0089] - [0094], [0227], [0335], [0405] - [0418]; example 4*; table 17 * ----- | 1,7-9 | |
| X | US 2004/219322 A1 (FISHER DENNIS K [US] ET AL) 4 November 2004 (2004-11-04) * examples 1A,1B; table 1 * ----- | 1,5 | |
| X | WO 2007/050236 A1 (EXXONMOBIL CHEM PATENTS INC [US]; YOKOHAMA RUBBER CO LTD [JP]; TSOU AN) 3 May 2007 (2007-05-03) * claims 50-55 * ----- | 6 | TECHNICAL FIELDS SEARCHED (IPC)<br>C08K<br>C08L<br>B60C<br>B29D |
| X | US 4 424 295 A (VAN ORNUM JOEL V [US] ET AL) 3 January 1984 (1984-01-03) * claims 1-4 * ----- | 1-4 | |
| X | US 2004/092648 A1 (JONES GLENN EDWARD [US] ET AL) 13 May 2004 (2004-05-13) * paragraph [0120] - paragraph [0123] * ----- | 6 | |
| X | US 2014/116594 A1 (MIYAZAKI TATSUYA [JP]) 1 May 2014 (2014-05-01) * claims 1-6; tables 1,2 * ----- | 6-9 | |

The present search report has been drawn up for all claims

1

| Place of search | Date of completion of the search | Examiner |
|---|---|---|
| Munich | 22 June 2018 | Barker, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 17 0022

This annex lists the patent family members relating to the patent documents cited in the above-mentioned European search report. The members are as contained in the European Patent Office EDP file on
The European Patent Office is in no way liable for these particulars which are merely given for the purpose of information.

22-06-2018

| Patent document cited in search report | | Publication date | Patent family member(s) | | Publication date |
|---|---|---|---|---|---|
| GB 875351 | A | 16-08-1961 | DE 1469999 | A1 | 13-02-1969 |
| | | | ES 255732 | A1 | 01-07-1960 |
| | | | GB 875351 | A | 16-08-1961 |
| | | | US 2996465 | A | 15-08-1961 |
| CA 621164 | A | 30-05-1961 | NONE | | |
| EP 2749403 | A1 | 02-07-2014 | BR 112014007987 | A2 | 04-04-2017 |
| | | | CN 103842165 | A | 04-06-2014 |
| | | | EP 2749403 | A1 | 02-07-2014 |
| | | | EP 3326793 | A1 | 30-05-2018 |
| | | | EP 3330065 | A1 | 06-06-2018 |
| | | | EP 3330066 | A1 | 06-06-2018 |
| | | | EP 3330067 | A1 | 06-06-2018 |
| | | | KR 20140080517 | A | 30-06-2014 |
| | | | RU 2014112000 | A | 10-11-2015 |
| | | | US 2014261976 | A1 | 18-09-2014 |
| | | | US 2016368256 | A1 | 22-12-2016 |
| | | | WO 2013051325 | A1 | 11-04-2013 |
| US 2004219322 | A1 | 04-11-2004 | US 2004219322 | A1 | 04-11-2004 |
| | | | WO 2005118733 | A1 | 15-12-2005 |
| WO 2007050236 | A1 | 03-05-2007 | EP 1940616 | A1 | 09-07-2008 |
| | | | JP 4896146 | B2 | 14-03-2012 |
| | | | JP 2009528925 | A | 13-08-2009 |
| | | | US 2009218024 | A1 | 03-09-2009 |
| | | | US 2013014880 | A1 | 17-01-2013 |
| | | | WO 2007050236 | A1 | 03-05-2007 |
| US 4424295 | A | 03-01-1984 | NONE | | |
| US 2004092648 | A1 | 13-05-2004 | AU 2003286509 | A1 | 03-06-2004 |
| | | | US 2004092648 | A1 | 13-05-2004 |
| | | | WO 2004044051 | A1 | 27-05-2004 |
| US 2014116594 | A1 | 01-05-2014 | CN 103772830 | A | 07-05-2014 |
| | | | DE 102013221633 | A1 | 30-04-2014 |
| | | | JP 5745490 | B2 | 08-07-2015 |
| | | | JP 2014084430 | A | 12-05-2014 |
| | | | US 2014116594 | A1 | 01-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015038183 A
- WO 2017018386 A


### Non-patent literature cited in the description


- Table of Solubility Parameters. **K. L. HOY.** Solvent and Coatings Materials Research and Development Department. Union Carbide Corp, 1985